# FASCICULE DE BREVET EUROPEEN

(11) **EP 3 743 735 B1**
(45) Date de publication et mention de la délivrance du brevet: **15.06.2022**
(21) Numéro de dépôt: 19703175.0
(22) Date de dépôt: 14.01.2019
(51) Int. Cl.: G01S 5/02

(54) **PROCÉDÉ DE GÉOLOCALISATION D'UN DISPOSITIF ÉMETTEUR DE SIGNAL**
VERFAHREN ZUR GEOGRAFISCHEN ORTUNG EINER SIGNALGEBENDEN VORRICHTUNG
METHOD FOR GEOGRAPHICALLY LOCATING A SIGNAL-EMITTING DEVICE

(30) Priorité: 22.01.2018 FR 1850485
(43) Date de publication de la demande: 02.12.2020
(73) Titulaire: Kerlink, 35235 Thorigne-Fouillard (FR)
(72) Inventeur: DELIBIE, Yannick, 35235 Thorigne-Fouillard (FR)
(74) Mandataire: Loyer & Abello
(86) Numéro de dépôt international: PCT/FR2019/050072
(87) Numéro de publication internationale: WO 2019/141931

(56) Documents cités:
- US-A1- 2003 013 146
- US-A1- 2015 379 860
- US-B1- 9 652 955
- US-B2- 8 265 651

## Description

### Domaine technique

L'invention se rapporte au domaine des procédés et systèmes de géolocalisation d'un dispositif émetteur de signal radio, notamment des dispositifs émetteurs de signaux appartenant au domaine de l'Internet des objets. Plus particulièrement, l'invention se rapporte à la géolocalisation d'un dispositif émetteur de signal dans le cadre d'un réseau comportant une pluralité de passerelles de concentration de données.

### Arrière-plan technologique

L'internet des objets consiste à permettre à des objets de communiquer automatiquement des données avec un réseau sans-fil. Par exemple, un compteur d'eau équipé d'un module de communication peut automatiquement communiquer un relevé d'eau à l'entreprise de gestion de la facturation de la consommation d'eau.

Des passerelles de concentration des messages, également appelées stations de réception, ont pour rôle d'assurer la réception et l'émission de données en provenance et à destination des modules de communication présents dans leur zone de couverture ainsi que de relayer ces données à des équipements en charge de les traiter, par exemple des serveurs accessibles sur un réseau basé sur le protocole IP (« Internet Protocol »).

Plusieurs technologies d'accès radio sont disponibles pour la mise en œuvre de réseaux de modules de communication. On peut citer à titre purement illustratif et non limitatif les technologies LoRa^{™}, Sigfox^{™} ou encore WM-Bus (de l'anglais « *Wireless Meter Bus* »), qui reposent notamment sur des types de modulation différents. Ces technologies ont en commun de proposer des communications longue distance (dites « *long range* » en anglais) qui permettent de diminuer le nombre de passerelles en augmentant la couverture de celles-ci.

Dans certaines situations, il peut être nécessaire de géolocaliser certains objets émetteurs de signaux radios. Cela peut par exemple être le cas pour des émetteurs associés à des objets mobiles tels que des palettes de transport de produits ou autre. Il est connu d'utiliser pour cela un guidage pas satellite (GPS). Cependant, l'utilisation de composants permettant la localisation via des données GPS peut être complexe, coûteuse et consommatrice d'énergie pour le dispositif émetteur de signal et n'est donc pas adaptée à toutes les utilisations ni à tous les dispositifs émetteurs de signaux.

Il est également connu, par exemple du document US2010/0138184 A1, un procédé de géolocalisation par triangulation à l'aide de données de réception d'un signal radio émis par un dispositif émetteur de signal au niveau d'une pluralité de récepteurs radio. De telles données de réception sont par exemple la date de réception du signal radio ou encore la puissance du signal radio reçu par les différents récepteurs. Cependant, une telle méthode par triangulation présente une précision dépendante de la technologie d'accès radio utilisée par le signal. Ainsi, dans le cas d'une technologie de communication longue distance, la précision de géolocalisation est limitée et ne permet pas toujours de géolocaliser le dispositif émetteur de signal avec la précision requise.

Il existe donc un besoin pour un procédé de géolocalisation d'un dispositif émetteur de signal radio présentant une faible complexité, une consommation réduite et un degré de précision adéquat.

US-A-2003013146 décrit un procédé de géolocalisation conforme au préambule respectif des revendications indépendantes.

### Résumé

L'invention permet de répondre à ces besoins. Une idée à la base de l'invention est de permettre une géolocalisation d'un dispositif émetteur de signal radio avec un degré de précision satisfaisant. Une idée à la base de l'invention est de géolocaliser un dispositif émetteur de signal radio à l'aide d'une infrastructure d'un réseau de communication simple, de faible consommation énergétique et présentant un degré de précision adapté aux besoins. En particulier, une idée à la base de l'invention est d'adapter le degré de précision de géolocalisation aux zones géographiques dans lequel ledit dispositif émetteur de signal est localisé.

Pour cela, l'invention fournit un procédé de géolocalisation d'un dispositif émetteur de signal, le procédé de géolocalisation comportant :
- fournir des premières données de réception, lesdites premières données de réception résultant de la réception par une pluralité de premières stations de réception d'un premier signal radio émis à une première fréquence par le dispositif émetteur de signal, lesdites premières stations de réception définissant une première zone de couverture géographique,
- calculer une première position géographique du dispositif émetteur de signal dans la première zone de couverture géographique à partir des premières données de réception,
- détecter que la position géographique du dispositif émetteur de signal est comprise dans une deuxième zone géographique prédéfinie, la deuxième zone géographique étant comprise dans la première zone de couverture géographique,
- émettre un signal d'instruction d'émission à destination du dispositif émetteur de signal, le signal d'instruction d'émission étant destiné à déclencher l'émission d'un deuxième signal radio à une deuxième fréquence distincte de la première fréquence par le dispositif émetteur de signal, la première fréquence étant inférieure à la deuxième fréquence,
- fournir des deuxièmes données de réception, lesdites deuxièmes données de réception résultant de la réception du deuxième signal radio par une pluralité de deuxièmes stations de réception, lesdites deuxièmes stations de réception étant aptes à recevoir un signal radio à la deuxième fréquence émis depuis la deuxième zone géographique, et
- calculer une deuxième position géographique du dispositif émetteur de signal dans la deuxième zone géographique à partir des deuxièmes données de réception.

Grâce à ces caractéristiques, il est possible d'adapter le degré de précision et donc l'infrastructure permettant la géolocalisation du dispositif émetteur de signal en fonction des zones géographiques dans lequel ledit dispositif émetteur de signal est localisé. Ainsi, lorsque le dispositif émetteur de signal est dans une zone ne nécessitant pas un degré de précision élevé, par exemple en trajet entre deux zones de stockage, la géolocalisation par les premières stations de réception offre une infrastructure adaptée tant d'un point de vue de la portée qu'au niveau de la précision de géolocalisation désirée et, lorsque le dispositif émetteur entre dans une zone nécessitant un degré de précision plus élevé, la géolocalisation par les deuxièmes stations de réception permet pour cette zone un degré de précision accru ne nécessitant une infrastructure adaptée que pour ladite zone.

Grâce à ces caractéristiques, il est également possible de limiter la consommation énergétique du dispositif émetteur de signal. En effet, l'émission du deuxième signal par le dispositif émetteur de signal n'est activée que lorsque le dispositif émetteur de signal est dans la deuxième zone géographique, c'est-à-dire dans une zone dans laquelle ledit deuxième signal peut être reçu par les deuxièmes stations de réception. Ainsi, le dispositif émetteur ne consomme pas d'énergie pour émettre le deuxième signal radio tant qu'il n'est pas localisé au moyen du premier signal radio comme étant dans la deuxième zone géographique.

Selon d'autres modes de réalisation avantageux, un tel procédé de géolocalisation peut présenter une ou plusieurs des caractéristiques suivantes.

Selon un mode de réalisation, préalablement à l'émission du signal d'instruction d'émission, les deuxièmes stations de réception sont dans un état inactifs dans lequel lesdites deuxièmes stations de réception sont inaptes à recevoir un signal radio à la deuxième fréquence émis depuis la deuxième zone, le procédé comportant en outre, préalablement à l'émission du signal d'instruction d'émission :
- Emettre un signal d'activation des deuxièmes stations de réception pour activer les deuxièmes stations de réception de manière à ce que lesdites deuxièmes stations de réception soient configurées pour recevoir un signal radio à la deuxième fréquence émis depuis la deuxième zone géographique.

Grâce à ces caractéristiques, il est possible limiter la consommation énergétique des deuxièmes stations de réception. En effet, lesdites deuxièmes stations de réception ne sont activées et ne consomment de l'énergie que lorsque le dispositif émetteur de signal est géolocalisé dans la deuxième zone géographique au moyen du premier signal radio, c'est-à-dire dans la zone dans laquelle lesdites deuxièmes stations de réception sont aptes à recevoir le deuxième signal radio.

Selon un mode de réalisation,
- la deuxième zone géographique prédéfinie comporte une pluralité de sous-zones géographiques,
- la pluralité de deuxièmes stations de réception comporte une pluralité de groupes de deuxièmes stations de réception, chaque groupe de deuxièmes stations de réception étant apte à recevoir un signal radio à la deuxième fréquence émis depuis une dite sous-zone géographique respective,
   et
- l'étape de détecter que la position géographique du dispositif émetteur de signal est comprise dans la deuxième zone géographique prédéfinie comporte détecter que la position géographique du dispositif émetteur de signal est comprise dans une sous zone géographique donnée de la pluralité de sous-zones géographiques,
- les deuxièmes données de réception résultent de la réception du deuxième signal radio par un groupe de deuxièmes stations de réception donné apte à recevoir un signal radio émis à la deuxième fréquence dans ladite sous-zone géographique donnée.

Grâce à ces caractéristiques, il est possible de géolocaliser le dispositif émetteur de signal dans plusieurs zones géographiques jointes dans lesquelles différents groupes de deuxièmes stations de réception sont installées. Ainsi, il est possible de géolocaliser le dispositif émetteur de signal au moyen de plusieurs groupes de deuxièmes stations distincts lorsque le dispositif émetteur de signal se déplace dans les différentes sous-zones de la deuxième zone géographique.

Selon un mode de réalisation, préalablement à l'émission du signal d'instruction d'émission, les deuxièmes stations de réception sont dans un état inactifs dans lequel lesdites deuxièmes stations de réception sont inaptes à recevoir un signal radio à la deuxième fréquence émis depuis la deuxième zone géographique, le procédé comportant en outre, préalablement à l'émission du signal d'instruction d'émission et postérieurement à la détection de ce que la position géographique du dispositif émetteur de signal est comprise dans la sous-zone géographique donnée :
- émettre un signal d'activation des deuxièmes stations de réception du groupe de deuxièmes stations de réception donné de manière à ce que lesdites deuxièmes stations de réception soient configurées pour recevoir le deuxième signal radio à la deuxième fréquence.

Grâce à ces caractéristiques, seules les deuxièmes stations de réception du groupe de deuxièmes stations de réception aptes à recevoir le deuxième signal dans la sous-zone géographique donnée sont activées, limitant ainsi la consommation énergétique de l'infrastructure.

Selon un mode de réalisation, le procédé comporte en outre postérieurement au calcul de la deuxième position géographique du dispositif émetteur de signal :
- Détecter que la position géographique du dispositif émetteur de signal est située hors de ladite sous-zone géographique donnée,
- Emettre un signal de désactivation des deuxièmes stations de réception du groupe de deuxièmes stations de réception donné de manière à ce que lesdites deuxièmes stations de réception soient rendues inactives.

Grâce à ces caractéristiques, les deuxièmes stations de réception sont désactivées et ne consomment donc plus d'énergie pour recevoir le deuxième signal radio lorsque ledit deuxième signal radio est émis depuis une sous zone autre que la sous zone dans laquelle lesdites deuxièmes stations de réception ne sont pas aptes à recevoir le deuxième signal radio.

Selon un mode de réalisation, le procédé comporte en outre postérieurement au calcul de la deuxième position géographique du dispositif émetteur de signal :
- Détecter que la position géographique du dispositif émetteur de signal est située hors de la deuxième zone géographique,
- émettre un signal d'instruction de fin d'émission à destination du dispositif émetteur de signal pour interrompre l'émission du deuxième signal radio à la deuxième fréquence par le dispositif émetteur de signal.

Grâce à ces caractéristiques, la consommation énergétique du dispositif émetteur de signal est réduite. En effet, dès lors que le dispositif émetteur de signal n'est plus dans une zone permettant sa géolocalisation au moyen des deuxièmes stations de réception, le dispositif émetteur de signal cesse de consommer de l'énergie pour émettre le deuxième signal.

Selon un mode de réalisation, le procédé comporte en outre :
- Détecter que la position géographique du dispositif émetteur de signal est située hors de la deuxième zone géographique,
- Emettre un signal de désactivation des deuxièmes stations de réception de manière à ce que lesdites deuxièmes stations de réception soient inactives.

Grâce à ces caractéristiques, les deuxièmes stations de réception sont désactivées et ne consomment donc plus d'énergie pour recevoir le deuxième signal radio lorsque le dispositif émetteur de signal est hors de ladite deuxième zone géographique.

Selon un mode de réalisation, les données de réception du premier signal comportent, pour chaque première station de réception ayant reçu le premier signal radio, une donnée d'identification dudit premier signal radio, une donnée de date de réception dudit premier signal radio et une donnée de position de ladite première station de réception.

Selon un mode de réalisation, les données de réception du premier signal radio comportent en outre une donnée d'intensité de réception dudit premier signal radio.

Selon un mode de réalisation, les données de réception du deuxième signal comportent, pour chaque deuxième station de réception de la pluralité de deuxièmes stations de réception ayant reçu le deuxième signal radio, une donnée d'identification dudit deuxième signal radio, une donnée de date de réception dudit deuxième signal radio et une donnée de position de la deuxième station de réception.

Selon un mode de réalisation, les données de réception du deuxième signal radio comportent en outre pour chaque deuxième station de réception un angle de réception et une intensité de réception dudit deuxième signal radio.

Selon un mode de réalisation, le premier signal radio est une trame d'un protocole de communication LoRa.

Selon un mode de réalisation, la première fréquence est comprise dans le groupe de fréquences de 433MHz, 868MHz et 915MHz.

Selon un mode de réalisation, le deuxième signal radio est une trame d'un protocole de communication UWB.

Selon un mode de réalisation, la deuxième fréquence est comprise entre 3GHz et 10 GHz, de préférence entre 6Ghz et 8GHz.

Selon un mode de réalisation, l'invention fournit également un système de géolocalisation d'un dispositif émetteur de signal, le système de géolocalisation comportant :
- Une pluralité de premières stations de réception, lesdites premières stations de réception définissant une première zone de couverture géographique, lesdites premières stations de réception étant configurées pour recevoir un premier signal radio émis par le dispositif émetteur de signal à une première fréquence et depuis la première zone de couverture géographique, les premières stations de réception étant configurées pour générer des premières données de réception résultant de la réception dudit premier signal radio,
- Une pluralité de deuxièmes stations de réception, lesdites deuxièmes stations de réception étant configurées pour recevoir un deuxième signal radio émis par le dispositif émetteur de signal à une deuxième fréquence distincte de la première fréquence et depuis une deuxième zone géographique prédéfinie, la deuxième zone géographique étant comprise dans la première zone de couverture géographique, les deuxièmes stations de réception étant configurées pour générer des deuxièmes données de réception résultant de la réception du deuxième signal radio,

- Un réseau de communication, les premières stations de réception étant connectées audit réseau de communication et configurées pour transmettre les premières données de réception à un serveur distant via le réseau de communication, les deuxièmes stations de réception étant connectées audit réseau de communication et configurées pour transmettre les deuxièmes données de réception audit serveur distant via le réseau de communication,
dans lequel, le serveur distant est configuré pour :
- calculer une première position géographique du dispositif émetteur de signal dans la première zone de couverture géographique à partir des premières données de réception,
- détecter que la position géographique du dispositif émetteur de signal est comprise dans la deuxième zone géographique prédéfinie,
- émettre un signal d'instruction d'émission à destination du dispositif émetteur de signal, le signal d'instruction d'émission étant destiné à déclencher l'émission du deuxième signal radio par le dispositif émetteur de signal,
- calculer une deuxième position géographique du dispositif émetteur de signal dans la deuxième zone géographique à partir des deuxièmes données de réception..

Selon un mode de réalisation, les deuxièmes stations de réception sont configurées pour pouvoir prendre un état inactif dans lequel lesdites deuxièmes stations de réception sont inaptes à recevoir un signal radio à la deuxième fréquence émis depuis la deuxième zone ou un état actif dans lequel lesdites deuxièmes stations de réception sont configurées pour recevoir un signal radio à la deuxième fréquence émis depuis la deuxième zone géographique.

Selon un mode de réalisation, le serveur distant est configuré pour, préalablement à l'émission du signal d'instructions d'émission, émettre un signal d'activation des deuxièmes stations de réception.

Selon un mode de réalisation, la deuxième zone géographique prédéfinie comporte une pluralité de sous-zones géographiques, la pluralité de deuxièmes stations de réception comportant une pluralité de groupes de deuxièmes stations de réception, chaque groupe de deuxièmes stations de réception étant apte à recevoir un signal radio à la deuxième fréquence émis depuis une dite sous-zone géographique respective.

Selon un mode de réalisation, le serveur distant est configuré pour détecter que la position géographique du dispositif émetteur de signal est comprise dans une sous zone géographique donnée de la pluralité de sous-zones géographiques et émettre un signal d'activation des deuxièmes stations de réception du groupe de deuxièmes stations de réception associé à ladite sous-zone géographique donnée.

Selon un mode de réalisation, le serveur distant est configuré pour détecter que la position géographique du dispositif émetteur de signal est située hors de ladite sous-zone géographique donnée et pour émettre un signal de désactivation des deuxièmes stations de réception dudit groupe de deuxièmes stations de réception donné.

Selon un mode de réalisation, le serveur distant est configuré pour détecter que la position géographique du dispositif émetteur de signal est située hors de la deuxième zone géographique, et pour émettre un signal d'instructions de fin d'émission à destination du dispositif émetteur de signal pour interrompre l'émission du deuxième signal radio à la deuxième fréquence par le dispositif émetteur de signal.

Selon un mode de réalisation, le serveur distant est configuré pour détecter que la position géographique du dispositif émetteur de signal est située hors de la deuxième zone géographique, et pour émettre un signal de désactivation des deuxièmes stations de réception.

### Brève description des figures

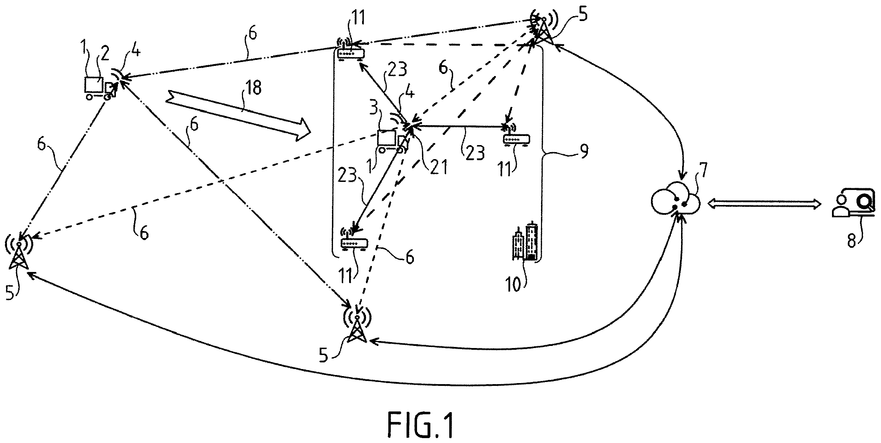

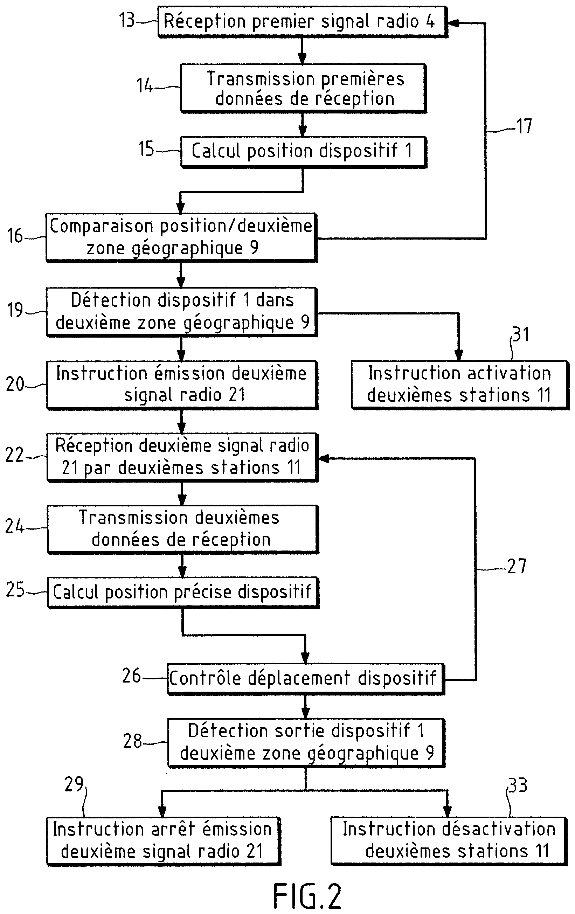

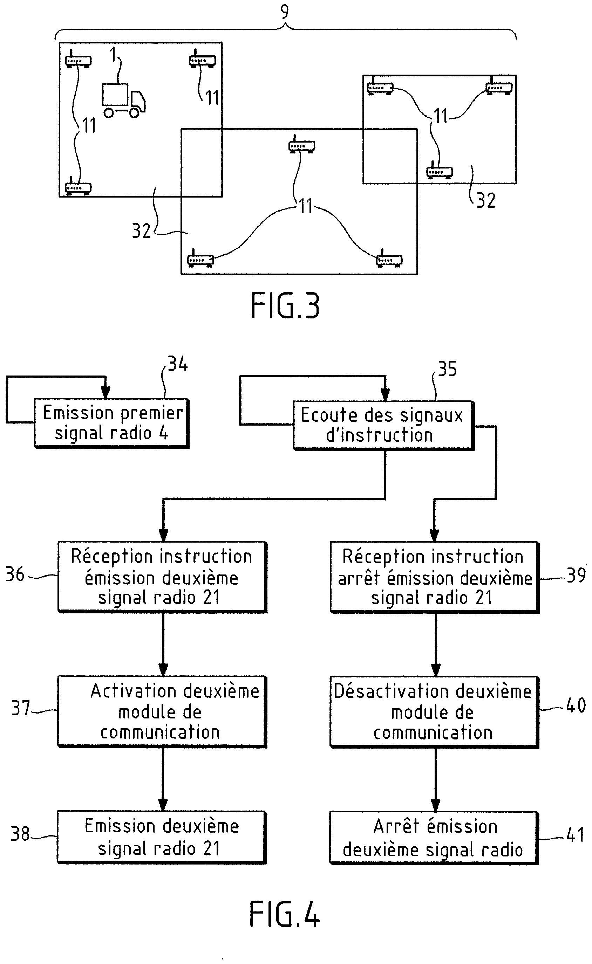

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une représentation schématique d'un objet émetteur de signal radio au sein d'un réseau de communication étendu comportant une pluralité de premières stations de réception, la zone de couverture dudit réseau de communication étendu comportant une deuxième zone géographique dans laquelle une pluralité de deuxièmes stations de réception sont agencées ;
- **La** **figure 2** est un diagramme illustrant les étapes successives d'un procédé de géolocalisation du dispositif émetteur de signal de la figure 1 ;
- **La** **figure 3** est une représentation schématique du dispositif émetteur de signal de la figure 1 circulant dans une deuxième zone géographique subdivisée en une pluralité de sous-zones géographiques, un groupe de deuxièmes stations étant agencé dans chacune desdites sous-zones géographiques ;
- **La** **figure 4** est un diagramme illustrant les étapes successives mises en œuvrepar le dispositif émetteur de signal au cours de sa géolocalisation ;

### Description détaillée de modes de réalisation

Sur la figure 1 est illustré un dispositif 1 émetteur de signal radio à géolocaliser. Un tel dispositif 1 est de tout type apte à communiquer des données via un signal radio, comme par exemple un dispositif 1 appartenant à l'internet des objets. Un tel dispositif 1 est équipé d'un module de communication sans fils et peut ainsi communiquer des données mesurées ou calculée, en fonction de ses caractéristiques. Un tel dispositif 1 appartenant à l'internet des objets a la particularité de consommer peu d'énergie, étant couramment qualifiés de « à basse consommation », et d'utiliser des moyens de communication à très bas débit, par exemple inférieur à 2Kbps.

Le dispositif 1 illustré sur la figure 1 est mobile géographiquement. Le dispositif 1 est par exemple d'un dispositif d'identification d'un conteneur transportant des marchandises. Ainsi, la figure 1 illustre ce dispositif 1 se déplaçant d'une première position 2 à une deuxième position 3. Afin de suivre les déplacements du dispositif 1 mobile, celui-ci est géo-localisé.

Afin de limiter la complexité et la consommation énergétique du dispositif 1 émetteur de signal, par exemple en évitant l'utilisation d'un système de guidage par satellite, il est préférable de géo-localiser le dispositif 1 en utilisant les signaux radios émis par ledit dispositif 1.

De façon régulière et/ou ponctuelle, le dispositif 1 émet un premier signal radio 4 afin de permettre sa géolocalisation. Ce premier signal radio 4 est reçu par une pluralité de premières stations 5 situées aux alentours du dispositif 1, comme illustré par les flèches 6 sur la figure 1. Ces premières stations 5 sont connectées à un réseau 7 tel qu'un réseau de communication étendu du type internet ou autre afin de transmettre des données relatives au premier signal radio 4 reçu à un dispositif distant destinataire dudit premier signal radio 4. Dans le cadre d'un système de géolocalisation, ces premières stations 5 sont connectées via le réseau 7 à un serveur distant 8 permettant de calculer la position géographique du dispositif 1.

Pour cela, le serveur distant 8 comporte une application de localisation (par exemple du type LBS de l'acronyme anglais « *Location-Based Service* »). L'application de localisation permet, lorsque le premier signal radio est 4 reçu par une pluralité de premières stations 5, de géo-localiser le dispositif 1 émetteur de signal ayant émis le premier signal radio 4. Cette géolocalisation peut être réalisée de nombreuses manières, par exemple par un procédé de géolocalisation par triangulation basé sur le temps d'arrivée du signal aux différentes stations de type TDoA (de l'acronyme anglais « *Time Differential of Arrivai* »), sur la qualité de signal RSSI (de l'acronyme anglais « *Received Signal Strength Indication* ») et/ou SNR (de l'acronyme anglais « *Signal to Noise Ratio* »), sur l'angle d'arrivée du signal aux différentes stations AoA (« *Angle of Arrivai* ») ou autre.

Ainsi, lorsqu'elle reçoit le premier signal radio 4, chaque première station 5 transmet au serveur distant 8 des premières données réception dudit premier signal radio 4. Ces premières données de réception du premier signal 4 sont par exemple un identifiant du premier signal radio 4, une date de réception du premier signal radio 4, une information de qualité de réception du premier signal radio 4, un angle de réception du premier signal radio 4, un l'identifiant et/ou une position géographique de la première station 5 etc. Ces données de réception du premier signal radio 4 permettent ainsi au serveur distant 8 de calculer la position géographique du dispositif 1.

Plusieurs technologies d'accès radio sont disponibles pour la mise en œuvre de réseaux de modules de communication. On peut citer à titre purement illustratif et non limitatif les technologies LoRa^{™}, Sigfox^{™} ou encore WM-Bus (de l'anglais « *Wireless Meter Bus* »), qui reposent notamment sur des types de modulation différents. Ces technologies ont en commun de proposer des communications longue distance (dites « *long range* » en anglais) qui permettent de diminuer le nombre de stations en augmentant la couverture de celles-ci.

La figure 1 illustre trois premières stations 5 utilisant une technologie de de réception à longue distance, la technologie LoraWan à titre d'exemple dans la suite de la description. De même le dispositif 1 émetteur de signal comporte un premier module de communication qui est configuré pour émettre le premier signal radio 4 selon des caractéristiques adaptées à la technologie LoraWan de sorte que les premières stations 5 puissent recevoir ledit premier signal radio 4. De même, le dispositif 1 est apte à recevoir un signal selon des caractéristiques adaptées à la technologie LoraWan au moyen du premier module de communication ou d'un module de réception distinct. Ainsi, les premières stations 5 telles qu'illustrées sur la figure 1 utilisant ces technologies définissent ensemble une première zone géographique de couverture dans laquelle le premier signal radio 4 peut être reçu par ces premières stations 5.

Cependant, la géolocalisation du dispositif 1 peut nécessiter un degré de précision différent selon la localisation du dispositif émetteur de signal. Ainsi, la précision de géolocalisation du dispositif 1 requise est différente lorsque ledit dispositif 1 est en extérieur, par exemple en transit entre deux pays ou régions éloignées, et lorsque ledit dispositif 1 est situé à l'intérieur d'un bâtiment ou dans une zone particulière, par exemple dans un entrepôt de stockage ou sur un quai de marchandises d'un port de commerce.

Le degré de précision dans la géolocalisation du dispositif 1 dépend entre autre de la technologie de communication utilisée entre le dispositif 1 et les premières stations 5. En effet, les technologies de communication longue distance présentent un niveau de précision limité dans les applications de géolocalisation. Ainsi par exemple, la technologie LoraWan permet une couverture sur une distance d'une quinzaine de kilomètre autour de chaque station et permet une précision de géolocalisation de l'ordre d'une cinquantaine de mètres.

Inversement, certaines technologies permettent un degré de précision nettement supérieur mais présentent une portée de couverture autour des stations beaucoup plus réduite. Ainsi, par exemple, la technologie UWB (de l'anglais « Ultra WideBand ») permet une précision de géolocalisation de l'ordre de 50 centimètres, mais la portée de communication entre un dispositif émetteur de signal et une station de réception utilisant cette technologie est réduite à 10 à 20 mètres.

La figure 1 illustre une deuxième zone géographique 9 comprise dans la première zone géographique. Cette deuxième zone géographique 9 est de taille réduite par rapport à la première zone géographique et correspond à une zone dans laquelle les besoins en précision de géolocalisation du dispositif 1 sont plus importants que dans le reste de la première zone géographique. A titre d'exemple, cette deuxième zone géographique peut correspondre à une zone située à l'intérieur d'un bâtiment 10 tel qu'un entrepôt ou bien une zone extérieure prédéfinie telle que la zone de stockage d'un port.

Une pluralité de deuxièmes stations de réception 11 sont configurées pour recevoir un signal radio émis depuis cette deuxième zone géographique 9 selon une technologie offrant le degré de précision de géolocalisation souhaité. Autrement dit, la deuxième zone géographique 9 correspond à une zone de couverture d'une pluralité de deuxièmes stations 11 ayant une portée de couverture réduite mais permettant une meilleure précision de géolocalisation comparativement aux premières stations 5. Par exemple, les deuxièmes stations 11 sont des stations UWB configurées pour recevoir un signal radio émis depuis la deuxième zone géographique 9 en utilisant la technologie UWB. Il est clair que ces deuxièmes stations de réception pourraient utiliser une autre technologie analogue permettant un degré de précision adapté, c'est-à-dire supérieur au degré de précision offert par les premières stations 5. D'autres technologies de localisation sans fil à haute précision et basse précision pouvant être utilisées sont décrites par exemple dans le document « A Survey of Indoor Localization Systems and Technologies » de Faheem Zafari, Athanasios Gkelias et Kin K. Leung, publié le 4 septembre 2017 sous la référence arXiv :1909.01015v1.

Le dispositif 1 comporte avantageusement un deuxième module de communication qui est configuré pour émettre un deuxième signal radio 21 selon des caractéristiques adaptées à la technologie UWB de sorte que les deuxièmes stations 11 puissent recevoir ledit deuxième signal radio 21. Cependant, ce deuxième module de communication peut prendre un état inactif, dans lequel le dispositif 1 n'émet pas le deuxième signal radio 21, ou un état actif, dans lequel le dispositif 1 émet le deuxième signal radio 21. Dans cet état actif, le deuxième signal radio 21 peut être émis de façon ponctuelle ou régulière selon les besoins et la configuration souhaitée du dispositif 1. De préférence, afin de limiter la consommation énergétique du dispositif 1, le deuxième module est par défaut dans un état inactif dans lequel il ne consomme pas ou peu d'énergie.

La figure 2 est un diagramme illustrant les étapes successives d'un procédé de géolocalisation permettant de géolocaliser le dispositif 1 émetteur de signal de façon simple et économique avec un degré de précision adapté aux besoins. Lorsque le dispositif est dans la première position 2 telle qu'illustrée sur la figure 1 dans laquelle il est situé dans la première zone géographique et hors de la deuxième zone géographique 9, le dispositif 1 émet le premier signal radio 4. Comme expliqué ci-dessus, le premier signal radio 4 émis depuis cette première position 2 est reçu par les trois premières stations 5 (étape 13). Les données de réception relatives à la réception du premier signal radio 4 par les premières stations 5 sont transmises au serveur distant (étape 14). Le serveur distant 8 calcule alors la position du dispositif 1 à partir dudit premier signal radio 4 (étape 15).

Le serveur distant 8 compare alors la position calculée du dispositif 1 aux coordonnées de la deuxième zone géographique 9 (étape 16). Autrement dit, le serveur distant 8 analyse la position calculée du dispositif 1 pour déterminer si le dispositif 1 est situé dans la deuxième géographique 9 ou hors de la deuxième zone géographique 9.Pour cela, le serveur distant 8 peut comporter ou consulter une base de données dans laquelle sont stockées les informations relatives aux coordonnées définissant la deuxième zone géographique 9.

Si le serveur distant détecte que le dispositif 1 est hors d'une zone nécessitant un degré de précision élevé (étape 17), par exemple, dans le cas de la première position 2, le serveur distant 8 reste dans l'attente de premières données de réception correspondant à la réception d'un autre premier signal radio 4 pour analyser si le dispositif 1 s'est déplacé dans la deuxième zone géographique 9 ou non. Le serveur distant 8 transmet éventuellement la position du dispositif 1 calculée à un dispositif tiers pouvant nécessiter une information de position du dispositif 1.

Si au contraire le dispositif 1 s'est déplacé et est entré dans la deuxième zone géographique 9, comme illustré par la flèche 18 sur la figure 1, le premier signal radio 4 est émis depuis la deuxième zone géographique 9, illustrée par la deuxième position 3 sur la figure 1. Ainsi, lorsque le serveur distant compare la position calculée du dispositif 1 aux coordonnées de la deuxième zone géographique 9 (étape 16), le serveur distant 8 détecte que le dispositif 1 dans cette deuxième position 3 est localisé dans la deuxième zone géographique 9 (étape 19). Dès lors, le serveur distant 8 émet un signal d'instruction à destination du dispositif 1 commandant l'émission d'un signal UWB par le dispositif 1 (étape 20).

Ce signal d'instruction est avantageusement relayé par les premières stations 5 à destination du dispositif 1. Ainsi, le signal d'instruction est relayé par les premières stations 5 à destination du dispositif 1, c'est-à-dire de son premier module de communication ou de son module de réception distinct selon des caractéristiques radio correspondant à la technologie des premières stations 5, par exemple la technologie LoraWan. La réception par le dispositif 1 du signal d'instruction relayé via les premières stations 5 ne nécessite donc pas l'activation préalable du deuxième module de communication dudit dispositif 1. Le deuxième module de communication du dispositif 1 peut ainsi rester inactif jusqu'à réception de ce signal d'instruction, ce qui limite la consommation du dispositif 1.

Lorsque le dispositif 1 reçoit le signal d'instruction, il active son émetteur radio UWB, c'est-à-dire son deuxième module de communication, pour émettre un deuxième signal radio 21 répondant aux caractéristiques de la technologie UWB. L'activation du deuxième module de communication pour émettre le deuxième signal radio 21 selon la technologie UWB postérieurement à la réception du signal d'instruction correspondant permet une économie d'énergie du dispositif 1, le deuxième module de communication ne consommant pas d'énergie pour émettre le deuxième signal radio 21 tant qu'il ne reçoit pas ledit signal d'instructions.

Ce deuxième signal radio 21 est reçu par les différentes deuxièmes stations 11 (étape 22), comme illustré par les flèches 23 sur la figure 1. De façon analogue aux premières stations 5, les deuxièmes stations 11 transmettent via le réseau de communication 7 des deuxièmes données de réception au serveur distant 8 (étape 24). Ces deuxièmes données de réception comportent par exemple une date de réception du deuxième signal radio 21, un angle de réception dudit deuxième signal radio 21, une qualité de réception du deuxième signal radio 21, des coordonnées géographiques des de la deuxième station 11, etc. Ces deuxièmes données de réception sont utilisées par le serveur distant 8 pour calculer une position précise du dispositif 1 émetteur de signal (étape 25), c'est-à-dire avec un degré de précision plus important que la position calculée à partir du premier signal radio 4. Cette position précise est éventuellement transmise ou utilisée par le serveur distant en fonction des besoins. Par exemple, la position précise du dispositif 1 est transmise à une application de gestion des stocks pour retrouver dans un entrepôt de centre de tri le dispositif émetteur de signal parmi une pluralité d'autres objets.

Lorsque le dispositif 1 émet le deuxième signal radio 21, il continue également à émettre, de façon régulière ou ponctuelle, le premier signal radio 4. Le serveur distant 8 continue à calculer la position du dispositif 1 à partir des premières données de réception et à comparer la position ainsi calculée à partir des premières données de réception aux coordonnées de la deuxième zone géographique 9 (étape 26). Ce contrôle de la position du dispositif 1 via les premières données de réception (étape 26) permet au serveur distant 8 de contrôler le déplacement du dispositif 1 et, en particulier, de détecter lorsque le dispositif 1se déplace hors de la deuxième zone géographique 9. Tant que le serveur distant ne détecte pas que le dispositif 1 est sorti de la deuxième zone géographique 9, il continue de contrôler la position du dispositif 1 via les premières données de réception en parallèle de son calcul de la position précise du dispositif 1 via les deuxièmes données de réception (étape 27).

Lorsque le serveur distant 8 détecte que le dispositif 1 s'est déplacé dans une position située hors de la deuxième zone géographique 9 (étape 28), le serveur distant 8 émet un signal d'instructions d'arrêt d'émission UWB à destination du dispositif 1 (étape 29), ce signal d'instructions d'arrêt étant par exemple relayé par les premières stations 5. En effet, le dispositif 1 étant sorti de la deuxième zone géographique 9, il n'est plus localisé dans la zone de couverture des deuxièmes stations 11 de sorte que lesdites deuxièmes stations 11 ne peuvent plus recevoir le deuxième signal radio 21 et transmettre au serveur distant 8 de deuxièmes données de réception permettant un calcul de la position précise du dispositif 1. A réception du signal d'instructions d'arrêt d'émission UWB, le dispositif 1 désactive son deuxième module de communication émettant en UWB et arrête d'émettre le deuxième signal radio 21 afin d'économiser l'énergie dudit dispositif 1.

Dans un mode de réalisation préférentiel, de façon analogue au deuxième module de communication émettant en UWB du dispositif 1, les deuxièmes stations 11 peuvent prendre un état actif dans lequel elles sont aptes à recevoir un signal radio UWB ou un état inactif dans lequel elles sont inaptes à recevoir un tel signal radio en UWB et consomment donc moins d'énergie. Ainsi, les deuxièmes stations 11 sont par défaut dans l'état inactif afin de réduire leur consommation énergétique. Les deuxièmes stations 11 sont cependant, dans cet état inactif, à l'écoute des signaux radio utilisant la technologie de communication des premières stations 5 avec le dispositif 1, typiquement la technologie Lora.

Lorsque le serveur distant détecte que le dispositif 1 est dans la deuxième zone géographique (étape 19), il envoie un signal d'activation à destination des deuxièmes stations 11 (étape 31). Ce signal d'activation peut être envoyé préalablement ou simultanément à l'envoi du signal d'instructions d'émission de signal UWB à destination du dispositif 1. Ce signal peut même être un signal commun avec le signal d'instruction d'émission en UWB à destination du dispositif 1, transmis via les premières stations 5.

Lorsqu'elles reçoivent ce signal d'activation, les deuxièmes stations 11 passent dans un état actif d'écoute UWB leur permettant de capter le deuxième signal 21 émis dans la deuxième zone géographique 9.

Inversement, lorsque le serveur distant 8 détecte que le dispositif 1 sort de la deuxième zone géographique 9 (étape 28), il envoie alors un signal de désactivation à destination des deuxièmes stations 11 (étape 33). A réception de ce signal de désactivation, les deuxièmes stations 11 passent de l'état actif à l'état inactif afin de réduire leur consommation énergétique.

La figure 3 illustre une variante de réalisation dans laquelle la deuxième zone géographique est divisée en une pluralité de sous-zones 32. Ces sous-zones 32 sont jointes deux à deux, éventuellement avec une portion de couverture commune. Chaque sous-zone 32 est associée à un groupe de deuxièmes stations 11 donné de la pluralité de deuxièmes stations 11 couvrant la deuxième zone géographique 9. Les deuxièmes stations 11 des différents groupes de deuxièmes stations 11 sont par défaut dans un état inactif. Lorsque le serveur distant 8 détecte que le dispositif 1 est dans la deuxième zone géographique 9 (étape 19), il compare la position du dispositif 1 calculée à partir des premières données de réception aux coordonnées géographiques des différentes sous-zones 32. De façon analogue aux coordonnées de la deuxième zone géographique 9, les coordonnées des différentes sous-zones 32 qui constituent la deuxième zone géographique 9 sont stockées dans une base de données. Le serveur distant 8 détermine alors dans quelle sous-zone 32 donnée est localisé le dispositif 1. Le signal d'activation des deuxièmes stations 11 (étape 31) est envoyé aux seules deuxièmes stations 11 associé à la sous-zone 32 déterminée.

Lorsque le serveur distant 8 contrôle la position du dispositif 1 (étape 26), le serveur distant contrôle si le dispositif 1 s'est déplacé ou non dans une nouvelle sous-zone 32. Si le serveur distant 8 détecté que le dispositif est entré dans une nouvelle sous-zone 32, il envoie alors un signal d'activation aux deuxièmes stations 11 associées à cette nouvelle sous-zone 32. De même, lorsque le serveur distant 8 détecte que le dispositif 1 s'est déplacé hors d'une sous-zone 32 dont le groupe de deuxièmes stations 11 associé a préalablement été activé, le serveur distant 8 envoie un signal de désactivation à destination dudit groupe de deuxièmes stations 11.

Le système de géolocalisation décris ci-dessus permet la géolocalisation à grande échelle, c'est à dire à grande distance mais avec une précision réduite via les premières stations 5, et à échelle réduite, c'est-à-dire à courte distance mais avec une précision accrue, via les deuxièmes stations 11 en fonction des degrés de précision en géolocalisation requis. Un tel système permet d'atteindre le degré de précision en géolocalisation souhaité avec une infrastructure peu coûteuse, simple à installer et à faible consommation. En particulier, ce système permet une grande précision de géolocalisation dans des zones prédéterminées sans nécessiter de système de guidage par satellite (GPS) intégré au dispositif 1 émetteur de signal.

La figure 4 illustre un diagramme illustrant les étapes successives mises en œuvre par le dispositif émetteur de signal au cours de sa géolocalisation.

Comme indiqué ci-dessus, le dispositif 1 émetteur de signal comporte un premier module de communication configuré pour émettre le premier signal radio 4 à une première fréquence et un deuxième module de communication configuré pour émettre le deuxième signal radio 21 à une deuxième fréquence distincte de la première fréquence. Afin d'économiser l'énergie, le deuxième module de communication est par défaut inactif.

Le dispositif 1 émet, de façon régulière ou sur requête, le premier signal radio 4 (étape 34). Comme expliqué ci-dessus, ce premier signal radio permet de géolocaliser le dispositif 1.

Le premier module de communication ou un module de réception indépendant du premier module de communication est également configuré pour écouter en continu les signaux radio d'instructions à destination du dispositif 1 (étape 35).

Lorsque le dispositif 1 reçoit le signal d'instruction d'émission (étape 36), le dispositif 1 active le deuxième module de communication (étape 37). Dès lors, le dispositif 1 émet, de façon ponctuelle ou régulière, le deuxième signal radio 21 (étape 38) tout en continuant à émettre le premier signal radio 4 (étape 34).

De même, lorsque le dispositif 1 reçoit un signal d'instruction de fin d'émission (étape 39), le dispositif 1 désactive le deuxième module de communication (étape 40) et cesse d'émettre le deuxième signal radio 21 (étape 41) et continue d'émettre le premier signal radio (4) seul.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Certains des éléments représentés, notamment les composants de la passerelle ou les modules de communication et/ou de réception du dispositif émetteur de signal, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de géolocalisation d'un dispositif émetteur de signal (1), le procédé de géolocalisation comportant :
- fournir des premières données de réception (14), lesdites premières données de réception résultant de la réception (13) par une pluralité de premières stations de réception (5) d'un premier signal radio (4) émis à une première fréquence par le dispositif émetteur de signal (1), lesdites premières stations de réception (5) définissant une première zone de couverture géographique,
- calculer (15) une première position géographique du dispositif émetteur de signal (1) dans la première zone de couverture géographique à partir des premières données de réception,
- détecter (19) que la position géographique du dispositif émetteur de signal (1) est comprise dans une deuxième zone géographique (9) prédéfinie, la deuxième zone géographique (9) étant comprise dans la première zone de couverture géographique,
- émettre (20) un signal d'instruction d'émission à destination du dispositif émetteur de signal (1), le signal d'instruction d'émission étant destiné à déclencher l'émission d'un deuxième signal radio (21) à une deuxième fréquence distincte de la première fréquence par le dispositif émetteur de signal (1), ladite première fréquence étant inférieure à la deuxième fréquence,
- fournir des deuxièmes données de réception (24), lesdites deuxièmes données de réception résultant de la réception (22) d'un deuxième signal radio (21) par une pluralité de deuxièmes stations de réception (11), lesdites deuxièmes stations de réception (11) étant aptes à recevoir un signal radio à une deuxième fréquence émis depuis une deuxième zone géographique (9), et
- calculer (25) une deuxième position géographique du dispositif émetteur de signal (1) dans la deuxième zone géographique (9) à partir des deuxièmes données de réception, **caractérisé par le fait que** :
- la détection (19) de ce que la position géographique du dispositif émetteur de signal (1) est comprise dans la deuxième zone géographique (9) prédéfinie est réalisée en comparant (16) la première position géographique du dispositif émetteur de signal calculée aux coordonnées de la deuxième zone géographique (9),
- l'émission (20) du signal d'instruction d'émission à destination du dispositif émetteur de signal (1) est réalisée en réponse à la détection que la position géographique du dispositif émetteur de signal est dans la deuxième zone géographique.

2. Procédé de géolocalisation selon la revendication 1, dans lequel, préalablement à l'émission (20) du signal d'instruction d'émission, les deuxièmes stations de réception (11) sont dans un état inactifs dans lequel lesdites deuxièmes stations de réception (11) sont inaptes à recevoir un signal radio à la deuxième fréquence émis depuis la deuxième zone (9), le procédé comportant en outre, préalablement à l'émission (20) du signal d'instruction d'émission :
- Emettre (31) un signal d'activation des deuxièmes stations de réception (11) pour activer les deuxièmes stations de réception (11) de manière à ce que lesdites deuxièmes stations de réception (11) soient configurées pour recevoir un signal radio à la deuxième fréquence émis depuis la deuxième zone géographique (9).

3. Procédé de géolocalisation selon la revendication 1, dans lequel :
- la deuxième zone géographique (9) prédéfinie comporte une pluralité de sous-zones géographiques (32),
- la pluralité de deuxièmes stations de réception (11) comporte une pluralité de groupes de deuxièmes stations de réception (11), chaque groupe de deuxièmes stations de réception (11) étant apte à recevoir un signal radio à la deuxième fréquence émis depuis une dite sous-zone géographique (32) respective,
et dans lequel
- l'étape de détecter (19) que la position géographique du dispositif émetteur de signal (1) est comprise dans la deuxième zone géographique (9) prédéfinie comporte détecter que la position géographique du dispositif émetteur de signal (1) est comprise dans une sous zone géographique (32) donnée de la pluralité de sous-zones géographiques (32),
- les deuxièmes données de réception résultent de la réception du deuxième signal radio (21) par un groupe de deuxièmes stations de réception (11) donné apte à recevoir un signal radio émis à la deuxième fréquence dans ladite sous-zone géographique (32) donnée.

4. Procédé de géolocalisation selon la revendication 3, dans lequel, préalablement à l'émission (20) du signal d'instruction d'émission, les deuxièmes stations de réception (11) sont dans un état inactifs dans lequel lesdites deuxièmes stations de réception (11) sont inaptes à recevoir un signal radio à la deuxième fréquence émis depuis la deuxième zone géographique (9), le procédé comportant en outre, préalablement à l'émission (19) du signal d'instruction d'émission et postérieurement à la détection de ce que la position géographique du dispositif émetteur de signal (1) est comprise dans la sous-zone géographique (32) donnée :
- émettre un signal d'activation des deuxièmes stations de réception (11) du groupe de deuxièmes stations de réception (11) donné de manière à ce que lesdites deuxièmes stations de réception (11) soient configurées pour recevoir le deuxième signal radio (21) à la deuxième fréquence.

5. Procédé de géolocalisation selon la revendication 4, comportant en outre postérieurement au calcul de la deuxième position géographique du dispositif émetteur de signal (1) :
- Détecter que la position géographique du dispositif émetteur de signal (1) est située hors de ladite sous-zone géographique donnée (32),
- Emettre un signal de désactivation des deuxièmes stations de réception (11) du groupe de deuxièmes stations de réception (11) donné de manière à ce que lesdites deuxièmes stations de réception (11) soient rendues inactives.

6. Procédé de géolocalisation selon l'une des revendications 1 à 5, comportant en outre postérieurement au calcul (25) de la deuxième position géographique du dispositif émetteur de signal (1) :
- Détecter (28) que la position géographique du dispositif émetteur de signal (1) est située hors de la deuxième zone géographique (9),
- émettre (29) un signal d'instruction de fin d'émission à destination du dispositif émetteur de signal (1) pour interrompre l'émission du deuxième signal radio (21) à la deuxième fréquence par le dispositif émetteur de signal (1).

7. Procédé de géolocalisation selon l'une des revendications 1 à 6, comportant en outre :
- Détecter (28) que la position géographique du dispositif émetteur de signal (1) est située hors de la deuxième zone géographique (9),
- Emettre (33) un signal de désactivation des deuxièmes stations de réception (11) de manière à ce que lesdites deuxièmes stations de réception (11) soient inactives.

8. Procédé de géolocalisation selon l'une des revendications 1 à 7, dans lequel les données de réception du premier signal comportent, pour chaque première station de réception (5) ayant reçu le premier signal radio, une donnée d'identification dudit premier signal radio (4), une donnée de date de réception dudit premier signal radio (4) et une donnée de position de ladite première station de réception (5).

9. Procédé de géolocalisation selon la revendication 8 dans lequel les données de réception du premier signal radio (4) comportent en outre une donnée d'intensité de réception dudit premier signal radio (4).

10. Procédé de géolocalisation selon l'une des revendications 1 à 9, dans lequel les données de réception du deuxième signal comportent, pour chaque deuxième station de réception (11) de la pluralité de deuxièmes stations de réception (11) ayant reçu le deuxième signal radio (21), une donnée d'identification dudit deuxième signal radio (21), une donnée de date de réception dudit deuxième signal radio (21) et une donnée de position de la deuxième station de réception (11).

11. Procédé de géolocalisation selon la revendication 10, dans lequel les données de réception du deuxième signal radio (21) comportent en outre pour chaque deuxième station de réception (11) un angle de réception et une intensité de réception dudit deuxième signal radio (21).

12. Procédé de géolocalisation selon l'une des revendications 1 à 11, dans lequel le premier signal radio (4) est une trame d'un protocole de communication LoRaWan.

13. Procédé de géolocalisation selon l'une des revendications 1 à 12, dans lequel le deuxième signal radio (21) est une trame d'un protocole de communication UWB.

14. Système de géolocalisation d'un dispositif émetteur de signal (1), le système de géolocalisation comportant :
- Une pluralité de premières stations de réception (5), lesdites premières stations de réception (5) définissant une première zone de couverture géographique, lesdites premières stations de réception (5) étant configurées pour recevoir un premier signal radio (4) émis par le dispositif émetteur de signal (1) à une première fréquence et depuis la première zone de couverture géographique, les premières stations de réception (5) étant configurées pour générer des premières données de réception résultant de la réception dudit premier signal radio (4),
- Une pluralité de deuxièmes stations de réception (11), lesdites deuxièmes stations de réception (11) étant configurées pour recevoir un deuxième signal radio (21) émis par le dispositif émetteur de signal (1) à une deuxième fréquence distincte de la première fréquence et depuis une deuxième zone géographique (9) prédéfinie, la deuxième zone géographique (9) étant comprise dans la première zone de couverture géographique, les deuxièmes stations de réception (11) étant configurées pour générer des deuxièmes données de réception résultant de la réception du deuxième signal radio (21),
- Un réseau de communication (7), les premières stations de réception (5) étant connectées audit réseau de communication (7) et configurées pour transmettre les premières données de réception à un serveur distant (8) via le réseau de communication (7), les deuxièmes stations de réception (11) étant connectées audit réseau de communication (7) et configurées pour transmettre les deuxièmes données de réception audit serveur distant (8) via le réseau de communication (7),
dans lequel, le serveur distant (8) est configuré pour :
- calculer une première position géographique du dispositif émetteur de signal (1) dans la première zone de couverture géographique à partir des premières données de réception,
- détecter que la position géographique du dispositif émetteur de signal (1) est comprise dans la deuxième zone géographique (9) prédéfinie,
- émettre un signal d'instruction d'émission à destination du dispositif émetteur de signal (1), le signal d'instruction d'émission étant destiné à déclencher l'émission du deuxième signal radio (21) par le dispositif émetteur de signal (1),
- calculer une deuxième position géographique du dispositif émetteur de signal (1) dans la deuxième zone géographique (9) à partir des deuxièmes données de réception,
**caractérisé par le fait que** le serveur distant (8) est configuré pour :
réaliser la détection (19) de ce que la position géographique du dispositif émetteur de signal (1) est comprise dans la deuxième zone géographique (9) prédéfinie en comparant (16) la première position géographique du dispositif émetteur de signal calculée aux coordonnées de la deuxième zone géographique (9),
réaliser l'émission (20) du signal d'instruction d'émission à destination du dispositif émetteur de signal (1) en réponse à la détection que la position géographique du dispositif émetteur de signal est dans la deuxième zone géographique.

## Patentansprüche

1. Verfahren zur geografischen Ortung eines Signalgebers (1), wobei das Verfahren umfasst:
- Bereitstellen von ersten Empfangsdaten (14), wobei die Empfangsdaten auf dem Empfang (13) eines ersten Funksignals (4) durch eine Vielzahl von ersten Empfangsstationen (5) beruhen, wobei die ersten Empfangsstationen (5) einen ersten geografischen Abdeckungsbereich definieren,
- Berechnen (15) einer ersten geografischen Position des Signalgebers (1) in dem ersten geografischen Abdeckungsbereich auf Grundlage der ersten Empfangsdaten,
- Erkennen (19), dass die geografische Position des Signalgebers (1) in einem zweiten vorgegebenen geografischen Bereich (9) liegt, wobei der zweite geografische Bereich (9) in dem ersten geografischen Abdeckungsbereich liegt,
- Senden (20) eines Sendebefehlssignal in Richtung des Signalgebers (1), wobei das Sendebefehlssignal dazu bestimmt ist, die Ausgabe eines zweiten Funksignals (21) durch den Signalgeber (1) auf einer zweiten, von der ersten Frequenz unterschiedlichen Frequenz, auszulösen, wobei die erste Frequenz niedriger als die zweite Frequenz ist,
- Bereitstellen von zweiten Empfangsdaten (24), wobei die zweiten Empfangsdaten auf dem Empfang (22) eines zweiten Funksignals (21) durch eine Vielzahl von zweiten Empfangsstationen (11) beruhen, wobei die zweiten Empfangsstationen (11) dazu geeignet sind, ein Funksignal auf einer zweiten Frequenz, welche aus dem zweiten geografischen Bereich (9) gesendet wird, zu empfangen, und
- Berechnen (25) einer zweiten geografischen Position des Signalgebers (1) in dem zweiten geografischen Bereich (9) auf Grundlage der zweiten Empfangsdaten, **dadurch gekennzeichnet, dass**:
- das Erkennen (19), dass die geografische Position des Signalgebers (1) in dem zweiten vorgegebenen geografischen Bereich (9) liegt, dadurch realisiert wird, indem die berechnete erste geografische Position des Signalgebers mit den Koordinaten des zweiten geographischen Bereiches (9) verglichen wird,
- das Senden (20) des Sendebefehlssignals in Richtung des Signalgebers (1) als Antwort auf das Erkennen, dass die geografische Position des Signalgebers in dem zweiten geografischen Bereich liegt, realisiert wird.

2. Verfahren zur geografischen Ortung gemäß Anspruch 1, wobei, im Vorfeld zum Senden (20) des Sendebefehlssignals, die zweiten Empfangsstationen (11) in einem inaktiven Zustand sind in dem die zweiten Empfangsstationen (11) nicht fähig sind, ein Funksignal auf der aus dem zweiten Bereich (9) ausgestrahlten zweiten Frequenz zu empfangen, wobei das Verfahren, im Vorfeld zum Senden (20) des Sendebefehlssignals, weiterhin umfasst:
- Senden eines Aktivierungssignals der zweiten Empfangsstationen (11), um die zweiten Empfangsstationen (11) zu aktivieren, so dass die zweiten Empfangsstationen (11) konfiguriert werden, um ein Funksignal auf der zweiten Frequenz, welche aus dem zweiten geografischen Bereich (9) gesendet wird, zu empfangen.

3. Verfahren zur geografischen Ortung gemäß Anspruch 1, wobei
- der zweite vorgegebene geografische Bereich (9) eine Vielzahl von geografischen Unterbereichen (32) umfasst,
- die Vielzahl der zweiten Empfangsstationen (11) eine Vielzahl von Gruppen von zweiten Empfangsstationen (11) umfassen, wobei jede Gruppe der zweiten Empfangsstationen (11) dazu geeignet ist, ein Funksignal auf der zweiten Frequenz, welche aus einem jeweiligen geografischen Unterbereich gesendet wird, zu empfangen,
und wobei
- der Schritt des Erkennens (19), dass die geografische Position des Signalgebers (1) in dem zweiten vorgegebenen geografischen Bereich liegt, umfasst das Erkennen, dass die geografische Position des Signalgebers (1) in einem vorgegebenen geografischen Unterbereich (32) aus der Vielzahl der geografischen Unterbereiche (32), liegt,
- die zweiten Empfangsdaten aus dem Empfang des zweiten Funksignals (21) durch eine gegebene Gruppe der zweiten Empfangsstationen (11), welche dazu geeignet ist, ein Funksignal, welches auf der zweiten Frequenz in dem vorgegebenen geographischen Unterbereich (32) gesendet wird, zu empfangen, folgt.

4. Verfahren zur geografischen Ortung gemäß Anspruch 3, wobei, im Vorfeld zum Senden (2) des Sendebefehlssignals, die zweiten Empfangsstationen (11) in einem inaktiven Zustand sind, in dem die zweiten Empfangsstationen nicht fähig sind, ein Funksignal auf der von dem zweiten Bereich (9) ausgestrahlten zweiten Frequenz zu empfangen, wobei das Verfahren, im Vorfeld zum Senden (20) des Sendebefehlssignals und nachfolgend zum Erkennen, dass die geografische Position des Signalgebers (1) in dem vorgegebenen geografischen Unterbereich (32) liegt, weiterhin umfasst:
- Senden eines Aktivierungssignals der zweiten Empfangsstationen (11) der vorgegebenen Gruppe der zweiten Empfangsstationen, so dass die zweiten Empfangsstationen (11) konfigurieren werden, um das zweite Funksignal (21) auf der zweiten Frequenz zu empfangen.

5. Verfahren zu geografischen Ortung gemäß Anspruch 4, umfassend weiterhin nachfolgend zur Berechnung der zweiten geografischen Position des Signalgebers (1):
- Erkennen, dass die geografische Position des Signalgebers (1) außerhalb des vorgegebenen geografischen Unterbereiches (32) liegt,
- Senden eines Deaktivierungssignals der zweiten Empfangsstationen (11) der gegeben Gruppe der zweiten Empfangsstationen (11), so dass die zweiten Empfangsstationen (11) deaktiviert werden.

6. Verfahren zur geografischen Ortung gemäß einem der Ansprüche 1 bis 5, umfassend weiterhin nachfolgend zur Berechnung (25) der zweiten geografischen Position des Signalgebers (1):
- Erkennen (28), dass die geografische Position des Signalgebers (1) außerhalb des zweiten geographischen Bereiches (9) liegt,
- Senden (29) eines Befehlssignals zur Beendigung des Sendens in Richtung des Signalgebers (1), um das Senden des zweiten Funksignals (21) an die zweite Frequenz durch den Signalgeber (1) zu unterbrechen.

7. Verfahren zur geografischen Ortung gemäß einem der Ansprüche 1 bis 6, umfassend weiterhin:
- Erkennen (28), dass die geografische Position des Signalgebers (1) außerhalb des zweiten geographischen Bereichs (9) liegt,
- Senden (33) eines Deaktivierungssignals der zweiten Empfangsstationen (11), so dass die zweiten Empfangsstationen (11) inaktiv sind

8. Verfahren zur geografischen Ortung gemäß einem der Ansprüche 1 bis 7, wobei die Empfangsdaten des ersten Signals, für jede erste Empfangsstation (5), welche ein erstes Funksignal erhalten hat, ein Identifikationsdatum des ersten Funksignals (4), ein Empfangsdatum des ersten Funksignals (4) und ein Positionsdatum der ersten Empfangsstation (5) umfassen.

9. Verfahren zur geografischen Ortung gemäß Anspruch 8, wobei die Empfangsdaten des ersten Funksignals (4) weiterhin umfassen ein Empfangsintensitätsdatum des ersten Funksignals (4).

10. Verfahren der geografischen Ortung gemäß einem der Ansprüche 1 bis 9, wobei die Empfangsdaten des zweiten Signals, für jede zweite Empfangsstation (11) aus der Vielzahl der zweiten Empfangsstationen (11), welche ein zweites Funksignal (21) empfangen haben, ein Identifikationsdatum des zweiten Funksignals (21), ein Empfangsdatums des zweiten Funksignals (21) und ein Positionsdatum der zweiten Empfangsstation (11) umfassen.

11. Verfahren zur geografischen Ortung gemäß Anspruch 10, wobei die Empfangsdaten des zweiten Funksignals (21) weiterhin für jede zweite Empfangsstation (11) eine Empfangswinkel und eine Empfangsintensität des zweiten Funksignals (21) umfassen.

12. Verfahren zur geografischen Ortung gemäß einem der Ansprüche 1 bis 11, wobei das erste Funksignal (4) ein Framework eines Kommunikationsprotokolls LoRaWan ist.

13. Verfahren zur geografischen Ortung gemäß einem der Ansprüche 1 bis 12, wobei das zweite Funksignal (21) ein Framework eines Kommunikationsprotokolls UWB ist.

14. System zur geografischen Ortung eines Signalgebers (1), wobei das System zur geografischen Ortung umfasst:
- eine Vielzahl von ersten Empfangsstationen (5), wobei die ersten Empfangsstationen (5) einen ersten geografischen Abdeckungsbereich definieren, wobei die ersten Empfangsstationen (5) konfiguriert sind, um ein erstes Funksignal, welches vom Signalgeber (1) aus einem ersten geografischen Abdeckungsbereich auf einer ersten Frequenz gesendet wird, zu empfangen, wobei die ersten Empfangsstationen (5) konfiguriert sind, um erste Empfangsdaten, welche aus dem Empfang des ersten Funksignals (4) folgen, zu erzeugen,
- eine Vielzahl von zweiten Empfangsstationen (11), wobei die zweiten Empfangsstationen (11) konfiguriert sind, um ein zweites Funksignal (21), welches vom Signalgeber (1) aus einem vorgegebenen zweiten geografischen Bereich (9) auf einer, von der ersten Frequenz unterschiedlichen zweiten Frequenz, gesendet wird, zu empfangen, wobei der zweite geografische Bereich (9) in dem ersten geografischen Abdeckungsbereich liegt, wobei die zweiten Empfangsstationen (11) konfiguriert sind, um zweite Empfangsdaten, welche aus dem Empfang des zweiten Funksignals (21) folgen, zu erzeugen,
- ein Kommunikationsnetzwerk (7), wobei die ersten Empfangsstationen (5) mit dem Kommunikationsnetzwerk verbunden sind und konfiguriert sind, um erste Empfangsdaten an einen Remote Server (8) über das Kommunikationsnetzwerk (7) zu übermitteln, wobei die zweiten Empfangsstationen (11) mit dem Kommunikationsnetzwerk (11) verbunden sind und konfiguriert sind, um die zweiten Empfangsdaten an den Remote Server (8) über das Kommunikationsnetzwerk (7) zu übermitteln,
wobei der Remote Server (8) konfiguriert ist, um:
- eine erste geografische Position des Signalgebers (1) in dem ersten geografischen Abdeckungsbereich ausgehend von den ersten Empfangsdaten zu berechnen,
- zu erkennen, dass die geografische Position des Signalgebers (1) in dem vorgegebenen zweiten geografischen Bereich liegt,
- ein Sendebefehlssignal in Richtung des Signalgebers (1) zu senden, wobei das Sendebefehlssignal dazu bestimmt ist, das Senden des zweiten Funksignals (21) durch den Signalgeber (1) auszulösen,
- eine zweite geographische Position des Signalgebers (1) in einem zweiten geographischen Bereich (9) ausgehend von den zweiten Empfangsdaten zu berechnen,
**dadurch gekennzeichnet, dass** der Remote Server (8) konfiguriert ist, um:
zu erkennen (19), dass die geografische Position des Signalgebers (1) in dem zweiten vorgegebenen geografischen Bereich (9) liegt, durch Vergleich der berechneten ersten geografischen Position des Signalgebers mit den Koordinaten des zweiten geografischen Bereichs (9),
das Senden (2) des Sendebefehlssignals in Richtung des Signalgebers als Reaktion auf das Erkennen, dass die geografische Position des Signalgebers in dem zweiten geografischen Bereich ist, zu verwirklichen.

## Claims

1. A method for geolocating a signal-transmitting device (1), the geolocation method comprising:
- supplying first reception data (14), said first reception data resulting from the reception (13) by a plurality of first reception stations (5) of a first radio signal (4) transmitted at a first frequency by the signal-transmitting device (1), said first reception stations (5) defining a first geographic coverage zone,
- calculating (15) a first geographic position of the signal-transmitting device (1) in the first geographic coverage zone from the first reception data,
- detecting (19) that the geographic position of the signal-transmitting device (1) is included in a predefined second geographic zone (9) the second geographic zone (9) being included in the first geographic coverage zone,
- transmitting (20) a transmission instruction signal to the signal-transmitting device (1), the transmission instruction signal being intended to trigger the transmission of a second radio signal (21) at a second frequency distinct from the first frequency by the signal-transmitting device (1), said first frequency being lower than the second frequency,
- supplying second reception data (24), said second reception data resulting from the reception (22) of the second radio signal (21) by a plurality of second reception stations (11), said second reception stations (11) being able to receive a radio signal at the second frequency transmitted from the second geographic zone (9), and
- calculating (25) a second geographic position of the signal-transmitting device (1) in the second geographic zone (9) from the second reception data, **characterized in that**
- detecting (19) that the geographic position of the signal-transmitting device (1) is included in the predefined second geographic zone (9) is achieved by comparing (16) the first geographic position of the signal-transmitting device calculated to the coordinates of the second geographic zone (9),
- transmitting (20) the transmission instruction signal to the signal-transmitting device (1) is achieved in response to the detection that the geographic position of the signal-transmitting device is in the second geographic zone.

2. The geolocation method as claimed in claim 1, wherein, prior to the transmission (20) of the transmission instruction signal, the second reception stations (11) are in an inactive state in which said second reception stations (11) are unable to receive a radio signal at the second frequency transmitted from the second zone (9), the method further comprising, prior to the transmission (20) of the transmission instruction signal:
- transmitting (31) an activation signal for the second reception stations (11) to activate the second reception stations (11) so that said second reception stations (11) are configured to receive a radio signal at the second frequency transmitted from the second geographic zone (9).

3. The geolocation method as claimed in claim 1, wherein:
- the predefined second geographic zone (9) comprises a plurality of geographic sub-zones (32),
- the plurality of second reception stations (11) comprises a plurality of groups of second reception stations (11), each group of second reception stations (11) being able to receive a radio signal at the second frequency transmitted from one said respective geographic sub-zone (32),
and wherein
- the step of detecting (19) that the geographic position of the signal-transmitting device (1) is included in the predefined second geographic zone (9) comprises detecting that the geographic position of the signal-transmitting device (1) is included in a given geographic sub-zone (32) of the plurality of geographic sub-zones (32),
- the second reception data result from the reception of the second radio signal (21) by a given group of second reception stations (11) able to receive a radio signal transmitted at the second frequency in said given geographic sub-zone (32).

4. The geolocation method as claimed in claim 3, wherein, prior to the transmission (20) of the transmission instruction signal, the second reception stations (11) are in an inactive state in which said second reception stations (11) are unable to receive a radio signal at the second frequency transmitted from the second geographic zone (9), the method further comprising, prior to the transmission (19) of the transmission instruction signal and after the detection that the geographic position of the signal-transmitting device (1) is included in the given geographic sub-zone (32):
- transmitting an activation signal for the second reception stations (11) of the given group of second reception stations (11) so that said second reception stations (11) are configured to receive the second radio signal (21) at the second frequency.

5. The geolocation method as claimed in claim 4, further comprising, after the calculation of the second geographic position of the signal-transmitting device (1):
- detecting that the geographic position of the signal-transmitting device (1) is situated outside of said given geographic sub-zone (32),
- transmitting a deactivation signal for the second reception stations (11) of the given group of second reception stations (11) so that said second reception stations (11) are rendered inactive.

6. The geolocation method as claimed in one of claims 1 to 5, further comprising, after the calculation (25) of the second geographic position of the signal-transmitting device (1):
- detecting (28) that the geographic position of the signal-transmitting device (1) is situated outside of the second geographic zone (9),
- transmitting (29) an end of transmission instruction signal to the signal-transmitting device (1) to interrupt the transmission of the second radio signal (21) at the second frequency by the signal-transmitting device (1).

7. The geolocation method as claimed in one of claims 1 to 6, further comprising:
- detecting (28) that the geographic position of the signal-transmitting device (1) is situated outside of the second geographic zone (9),
- transmitting (33) a deactivation signal for the second reception stations (11) so that said second reception stations (11) are inactive.

8. The geolocation method as claimed in one of claims 1 to 7, wherein the reception data of the first signal comprise, for each first reception station (5) having received the first radio signal, a datum of identification of said first radio signal (4), a datum of date of reception of said first radio signal (4) and a datum of position of said first reception station (5).

9. The geolocation method as claimed in claim 8, wherein the reception data of the first radio signal (4) further comprise a datum of intensity of reception of said first radio signal (4).

10. The geolocation method as claimed in one of claims 1 to 9, wherein the reception data of the second signal comprise, for each second reception station (11) of the plurality of second reception stations (11) having received the second radio signal (21), a datum of identification of said second radio signal (21), a datum of date of reception of said second radio signal (21) and a datum of position of the second reception station (11).

11. The geolocation method as claimed in claim 10, wherein the reception data of the second radio signal (21) further comprise, for each second reception station (11), an angle of reception and an intensity of reception of said second radio signal (21).

12. The geolocation method as claimed in one of claims 1 to 11, wherein the first radio signal (4) is a frame of a LoRaWan communication protocol.

13. The geolocation method as claimed in one of claims 1 to 12, wherein the second radio signal (21) is a frame of a UWB communication protocol.

14. A system for geolocating a signal-transmitting device (1), the geolocation system comprising:
- a plurality of first reception stations (5), said first reception stations (5) defining a first geographic coverage zone, said first reception stations (5) being configured to receive a first radio signal (4) transmitted by the signal-transmitting device (1) at a first frequency and from the first geographic coverage zone, the first reception stations (5) being configured to generate the first reception data resulting from the reception of said first radio signal (4),
- a plurality of second reception stations (11), said second reception stations (11) being configured to receive a second radio signal (21) transmitted by the signal-transmitting device (1) at a second frequency distinct from the first frequency and from a predefined second geographic zone (9), the second geographic zone (9) being included in the first geographic coverage zone, the second reception stations (11) being configured to generate second reception data resulting from the reception of the second radio signal (21),
- a communication network (7), the first reception stations (5) being connected to said communication network (7) and configured to transmit the first reception data to a remote server (8) via the communication network (7), the second reception stations (11) being connected to said communication network (7) and configured to transmit the second reception data to said remote server (8) via the communication network (7),
wherein, the remote server (8) is configured to:
- calculate a first geographic position of the signal-transmitting device (1) in the first geographic coverage zone from the first reception data,
- detect that the geographic position of the signal-transmitting device (1) is included in the predefined second geographic zone (9) by comparing (16) the first geographic position of the signal-transmitting device calculated at the coordinates of the second geographic zone (9),
- transmit a transmission instruction signal to the signal-transmitting device (1) in response to the detection that the geographic position of the signal-transmitting device is in the second geographic zone, the transmission instruction signal being intended to trigger the transmission of the second radio signal (21) by the signal-transmitting device (1),
- calculate a second geographic position of the signal-transmitting device (1) in the second geographic zone (9) from the second reception data.
